# EUROPEAN PATENT SPECIFICATION

(11) **EP 3 276 792 B1**
(45) Date of publication and mention of the grant of the patent: **17.06.2020**
(21) Application number: 16786166.5
(22) Date of filing: 03.02.2016
(51) Int. Cl.: H02K 1/18, H02K 1/14, H02K 1/16

(54) **SPLIT STATOR CORE AND CORRESPONDING STATOR OR CORRESPONDING ROTARY ELECTRIC MACHINE**
GETEILTER STATORKERN UND KORRESPONDIERENDER STATOR ODER KORRESPONDIERENDE DREHENDE, ELEKTRISCHE MASCHINE
NOYAU STATORIQUE DIVISE ET STATOR CORRESPONDANT OU MACHINE ÉLECTRIQUE TOURNANTE CORRESPONDANTE

(30) Priority: 30.04.2015 JP 2015092858
(43) Date of publication of application: 31.01.2018
(73) Proprietor: Yamaha Hatsudoki Kabushiki Kaisha, Iwata-shi, Shizuoka 438-8501 (JP)
(72) Inventor: MASUDA, Masafumi, Iwata-shi Shizuoka 438-8501 (JP); HINO, Haruyoshi, Iwata-shi Shizuoka 438-8501 (JP); NISHIKAWA, Takahiro, Iwata-shi Shizuoka 438-8501 (JP)
(74) Representative: Zimmermann, Tankred Klaus
(86) International application number: PCT/JP2016/053158
(87) International publication number: WO 2016/174889

(56) References cited:
- EP-A1- 1 638 187
- WO-A1-2006/114890
- WO-A1-2006/114890
- JP-A- 2012 075 232
- JP-A- 2012 075 232

## Description

### Technical Field

The present teaching relates to a stator core and a stator for a rotary electric machine, and to a rotary electric machine.

### Background Art

As a stator core for use in a rotary electric machine, a stator core with split core design is conventionally proposed. The split core design, in general, is aimed at improving the space factor of windings to achieve reduction of a copper loss, etc., thus enabling improvement in characteristics and downsizing of a rotary electric machine. For example, JP 2004-80950 A discloses a split core design configured such that a plurality of split core parts are assembled together with fixing members such as pins or screws passing through the respective split core parts in the axial direction.

WO 2006/114890 A1 describes a stator of an outer rotor motor according to the preamble of claim 1. The stator is arranged in such way that a plurality of core elements divided in units of magnetic pole including the magnetic pole portion and the yoke portion are coupled on the coupling face of the yoke portion and attached integrally to the motor in a ring shape. The stator of an outer rotor motor comprises: a first core element where both coupling faces at the yoke portion are formed to be inclined so that the motor core side recedes farther from the center line of the magnetic pole portion and having an inner end face coupled with the motor core; a second core element where both coupling faces at the yoke portion are formed to be inclined so that the motor core side approaches closer to the center line of the magnetic pole portion and coupled with the coupling face of the first core element; a fixed rod inserted into the yoke portion of the second core element in parallel with the motor core; and an end plate into which the end portion of the fixed rod is inserted and which couples the first and second core elements by pressing the fixed rod against the motor core side, thus coupling the first core element with the motor core.

JP 2012-075232 describes a stator for a rotating electric machine enabling easy manufacture of the stator in which coils are arranged in a distributed and wound state on semi-open type slots. A stator core of the stator is formed by combining yoke core parts and tooth core parts in a circumferential direction. Circumferential contact faces in which the yoke core part and the tooth core part adjacent to each other face each other are formed to have a surface shape enabling the yoke core part to be arranged between the pair of tooth core parts and preventing the tooth core part from being extracted from between the pair of yoke core parts.

EP 1 638 187 A1 describes a stator for a rotary electric machine, which included a plurality of stator cores arranged in a circumferentially spaced relation about a central axis of the stator, and a molded resin filled between the adjacent stator cores. Each of the stator cores includes a meshing portion which is meshed with the molded resin and formed on circumferentially opposed side surfaces of the stator core. The stator core includes a plurality of stator segments laminated along a direction of the central axis so as to form the meshing portion.

### Summary of the Invention

### Technical Problem

The split core design as disclosed in JP 2004-80950 A requires that the fixing members be provided in the respective split core parts. This involves a problem of complexity of a stator core structure and cumbersomeness of a manufacturing process. In addition, providing the fixing members, whose material and structure are different from those of the split core parts, may hinder the flow of magnetic fluxes in the split core part and adversely affect characteristics of a rotary electric machine.

### Summary of the Invention

An object of the present teaching is to provide: a stator core and a stator for a rotary electric machine, having a split core design and given a simple and easy structure that makes it possible to seek improvement in characteristics of the rotary electric machine with avoidance of cumbersomeness of a manufacturing process; and a rotary electric machine.

This object is achieved by stator core according to claim 1, by a stator according to claim 8, and by a rotary electric machine according to claim 9.

### Solution to Problem

The present teaching can adopt the following configurations.
(1) A stator core for a rotary electric machine, the stator core including:
   a plurality of first members arranged in a circumferential direction and each including a first tooth part, first engaging parts, and a base part, the first tooth part extending toward one side of inward and outward sides with respect to a radial direction, the first engaging parts provided on opposite sides of the first tooth part with respect to the circumferential direction, the base part provided on the other side of the inward and outward sides with respect to the radial direction;
   a plurality of second members arranged in the circumferential direction and each including a second tooth part and a second engaging part, the second tooth part extending toward the one side with respect to the radial direction, the second engaging part being engageable with two of the first engaging parts adjacent to each other in the circumferential direction, the plurality of second members being arranged such that the second tooth part is positioned between two adjacent first tooth parts; and
   a support member configured to abut against the base parts of the plurality of first members, which are arranged in the circumferential direction, so as to press the base parts of the plurality of first members from the other side toward the one side with respect to the radial direction,
   the first engaging part and the second engaging part being configured such that movement of the second member toward the one side with respect to the radial direction is restricted by engagement of the second engaging part with two of the first engaging parts adjacent to each other in the circumferential direction, the engagement caused when the base parts of the plurality of first members are pressed from the other side toward the one side with respect to the radial direction, the pressing caused by abutment of the support member against the base parts of the plurality of first members.

   In such a stator core, the first engaging part and the second engaging part are configured such that movement of the second member toward the one side with respect to the radial direction is restricted by engagement of the second engaging part with two of the first engaging parts adjacent to each other in the circumferential direction, the engagement caused when the base parts of the plurality of first members are pressed from the other side toward the one side with respect to the radial direction, the pressing caused by abutment of the support member against the base parts of the plurality of first members. Accordingly, the relative positional relationship of the plurality of first members and the plurality of second members is fixed by the support member provided so as to abut against the base parts of the plurality of first tooth parts which are arranged in the circumferential direction. In the stator core of (1), therefore, cumbersomeness of a manufacturing process can be avoided with a simple structure, unlike the conventional split core design in which fixing members are separately provided in respective split core parts.
   In the stator core of (1), the second tooth parts and the first tooth parts are provided so as to extend toward one side (for example, the outward side) with respect to the radial direction. The first engaging parts are provided on opposite sides of the first tooth part with respect to the circumferential direction. The second engaging part is engaged with both of two first engaging parts that are adjacent to each other in the circumferential direction. Thus, a primary magnetic flux path, in which magnetic fluxes between the first tooth part and the second tooth part flow, is formed so as to pass through, for example, the first tooth part, at least one of the first engaging parts, the second engaging part, and the second tooth part. On the other hand, a contact region between the support member and the base part is located on the other side (for example, inward) of the first tooth part with respect to the radial direction, and the contact region is not included in the primary magnetic flux path. In the stator core of (1), therefore, the support member is less influential to magnetic fluxes flowing in the primary magnetic flux path, unlike the conventional split core design in which fixing members are provided in split core parts.
   In the stator core of (1), furthermore, abutment of the support member against the base parts of the plurality of first members generates a force with which the support member presses the base parts of the plurality of first members toward the one side (for example, the outward side) with respect to the radial direction. On the other hand, upon abutment of the support member against the base parts of the plurality of first members, the first engaging parts are brought into engagement with the second engaging part, so that movement of the second member toward the one side (for example, the outward side) with respect to the radial direction is restricted. This enhances a force of contact between the first member and the second member in the radial direction. As a result, close contact between the first member and the second member is made in the contact position between the first member and the second member. This suppresses occurrence of a minute gap in a contact region between the first member and the second member. The magnetic resistance of a gap is much higher than the magnetic resistance in the stator core. For example, the magnetic resistance of a gap is thousands of times (for example, about 5000 times) higher than the magnetic resistance of a stator core formed of ordinary electrical steel sheets. In the stator core of (1), a gap is less likely to be generated in the primary magnetic flux path, and thus the magnetic resistance of the primary magnetic flux path is low. Accordingly, the stator core of (1) allows more magnetic fluxes to flow therethrough. Adoption of the stator core of (1) for a rotary electric machine enables enhancement of an electromotive force.
   As above, the stator core of (1) provides a simple and easy structure that can improve characteristics of the rotary electric machine by lowering the magnetic resistance of the primary magnetic flux path, with avoidance of cumbersomeness of a manufacturing process, while enjoying the advantage provided by the split core design, that is, the advantage that a copper loss is reduced due to improvement in the space factor of windings.
(2) The stator core of (1), in which
   the first tooth part and the second tooth part extend toward the outward side with respect to the radial direction,
   the base part is located inward with respect to the radial direction,
   the support member is configured to abut against the base parts of the plurality of first members so as to press the base parts of the plurality of first members from the inward side toward the outward side with respect to the radial direction, and
   the first engaging part and the second engaging part are configured such that movement of the second member toward the outward side with respect to the radial direction is restricted by engagement of the second engaging part with two of the first engaging parts adjacent to each other in the circumferential direction, the engagement caused when the base parts of the plurality of first members are pressed from the inward side toward the outward side with respect to the radial direction, the pressing caused by abutment of the support member against the base parts of the plurality of first members.
   The stator core of (2) is for use in a rotary electric machine of outer rotor type. In the stator core of (2), movement of the second member toward the outward side with respect to the radial direction can be restricted by engagement between the first engaging parts and the second engaging part. The configuration of (2), therefore, is able to fix the relative positional relationship of the plurality of first members and the plurality of second members, without the need to provide a fixing member in a split core part of the stator core for use in a rotary electric machine of outer rotor type, unlike the conventional split core design.
(3) The stator core of (2), in which
   the first member and the second member have a tensile stress receiving region to which a tensile stress is applied upon engagement of the second engaging part with two of the first engaging parts adjacent to each other in the circumferential direction under restriction of movement of the second member toward the outward side with respect to the radial direction, and the tensile stress receiving region is at least partially located in a magnetic flux path passing from the first tooth part to the second tooth part via the inside of the stator core.
   In the stator core of (3), a tensile stress receiving region is generated in the first member and the second member as a result of engagement between the first engaging parts and the second engaging part. The tensile stress receiving region is at least partially located in a magnetic flux path that passes from the first tooth part to the second tooth part via the inside of the stator core. Thus, at least part of magnetic fluxes flowing from the first tooth part to the second tooth part via the inside of the stator core passes through the tensile stress receiving region. This can suppress an iron loss resulting from a distortion (for example, a punching distortion generated during pressing) generated during processing performed on the first member and the second member.
   Accordingly, the stator core of (3) can suppress an iron loss and makes it possible to seek improvement in the characteristics of the rotary electric machine while enjoying the advantage provided by the split core design, that is, the advantage that a copper loss is reduced due to improvement in the space factor of windings.
(4) The stator core of any one of (1) to (3), in which
   the first engaging part and the second engaging part have circumferential contact portions configured to make surface contact with each other in the circumferential direction.
   In the stator core of (4), the magnetic resistance of a magnetic flux path (for example, a primary magnetic flux path) is lowered more effectively because of the surface contact between the first engaging part and the second engaging part which occurs in the circumferential contact portions. The characteristics of the rotary electric machine can be improved more effectively.
(5) The stator core of (4), in which
   the circumferential contact portion is configured such that, when viewed along the axis line of the stator core, an intersection between a straight line on the extension of a side where the first engaging part is contacted by the second engaging part and a straight line extending in the radial direction and passing through the center of the second member with respect to the circumferential direction is located inward of the circumferential contact portion with respect to the radial direction.
   The stator core of (5) can enhance a force acting in the circumferential direction on the two adjacent first engaging parts, which force is generated by abutment of the support member against the base parts of the plurality of first members. This can enhance a force of engagement of the second engaging part with the two adjacent first engaging parts. As a result, occurrence of a minute gap in the contact region between the first member and the second member is suppressed more effectively. The characteristics of the rotary electric machine can be improved more effectively.
(6) The stator core of any one of (1) to (5), in which
   the first member is configured such that, while the support member abuts against the base parts of the plurality of first members, a gap is ensured between the base parts of the first members adjacent to each other in the circumferential direction.
   The stator core of (6) provides a wider allowable range of the dimensions of the plurality of first members, which makes a manufacturing process easy. In addition, the presence of the gap makes it easy to assemble the stator core (in particular, to engage the first engaging parts with the second engaging parts). Accordingly, cumbersomeness of a manufacturing process can be avoided more effectively with a simpler and easier structure.
(7) The stator core of any one of (1) to (5), in which
   the first engaging part and the second engaging part have radial contact portions configured to make surface contact with each other in the radial direction.
   In the stator core of (7), the magnetic resistance of a magnetic flux path (for example, a primary magnetic flux path) is lowered more effectively because of the surface contact between the first engaging part and the second engaging part which occurs in the radial contact portions. The characteristics of the rotary electric machine can be improved more effectively.
(8) The stator core of (7), in which
   the first member is configured such that, while the support member abuts against the base parts of the plurality of first members, a radial length (D) from a surface of the support member on the first member side to a top surface of the first tooth part is substantially equal to the sum of a radial length (d1) and a radial length (d2), the radial length (d1) being a length from the surface of the support member on the first member side to a contact surface of the radial contact portion on which the first engaging part and the second engaging part are in contact with each other, the radial length (d2) being a length from the contact surface of the radial contact portion on which the first engaging part and the second engaging part are in contact with each other to a top surface of the second tooth part.
   In the stator core of (8), it is easy to align the positions of the top surfaces of the first tooth part and the second tooth part with respect to the radial direction. Accordingly, cumbersomeness of a manufacturing process can be avoided more effectively with a simpler and easier structure.
(9) A stator for a rotary electric machine, the stator including:
   the stator core of any one of (1) to (8); and
   windings wound on the first tooth parts and the second tooth parts.

   The stator of (9) provides a stator having a simple and easy structure that makes it possible to seek improvement in the characteristics of the rotary electric machine with avoidance of cumbersomeness of a manufacturing process.
(10) A rotary electric machine including:
   the stator of (9); and
   a rotor including a permanent magnet part that is arranged so as to face the first tooth parts and the second tooth parts of the stator with a gap ensured between the permanent magnet part and the tooth parts.

The rotary electric machine of (10) provides a simple and easy structure that makes it possible to seek improvement in characteristics with avoidance of cumbersomeness of a manufacturing process.

### Advantageous Effects of the Invention

The present teaching provides a simple and easy structure that makes it possible to seek improvement in characteristics of a rotary electric machine with avoidance of cumbersomeness of a manufacturing process.

### Brief Description of the Drawings

[Fig. 1] A diagram schematically showing a stator core according to an embodiment of the present teaching as viewed along its axis line.
[Fig. 2] A diagram schematically showing a state of the stator core before a support member is provided, as viewed along the axis line.
[Fig. 3] Fig. 3A is a diagram schematically and partially showing, on an enlarged scale, a state of the stator core before the support member is provided, as viewed along the axis line; and Fig. 3B is a diagram schematically and partially showing, on an enlarged scale, a state of the stator core after the support member is provided, as viewed along the axis line.
[Fig. 4] A diagram schematically and partially showing, on an enlarged scale, the stator core according to the embodiment of the present teaching, as viewed along the axis line.
[Fig. 5] A diagram schematically showing a first member according to the embodiment of the present teaching, as viewed along the axis line.
[Fig. 6] Figs. 6A and 6B are diagrams each schematically and partially showing, on an enlarged scale, a state of the stator core after the support member is provided, as viewed along the axis line.
[Fig. 7] Fig. 7A is a diagram schematically showing an exemplary layout of plate members on a magnetic material plate, when the plate members are punched out of the magnetic material plate for the manufacture of first and second members; and Fig. 7B is a diagram schematically showing another example.
[Fig. 8] A diagram for schematically showing a stress distribution in a part of the stator core according to the embodiment of the present teaching, as viewed along the axis line.
[Fig. 9] A diagram schematically showing a rotary electric machine according to the embodiment of the present teaching, as viewed along the axis line.
[Fig. 10] A diagram schematically and partially showing, on an enlarged scale, a stator core according to another embodiment of the present teaching, as viewed along its axis line.
[Fig. 11] A diagram schematically and partially showing, on an enlarged scale, a stator core according to another embodiment of the present teaching, as viewed along its axis line.
[Fig. 12] A diagram schematically and partially showing, on an enlarged scale, a stator core according to another embodiment of the present teaching, as viewed along its axis line.

### Description of Embodiments

Embodiments of the present teaching are described below with reference to the drawings.

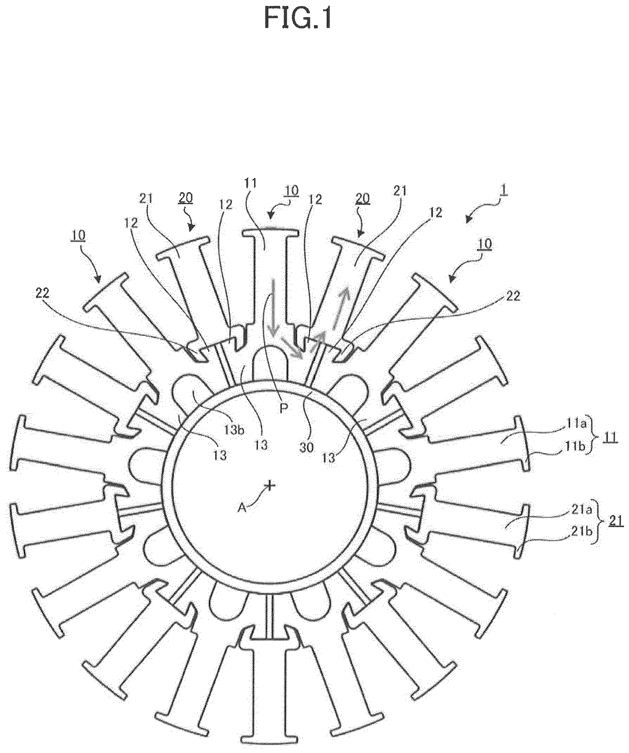

Fig. 1 is a diagram schematically showing a stator core 1 for a rotary electric machine (which hereinafter may be referred to simply as "stator core") according to an embodiment of the present teaching, as viewed along its axis line. The reference sign A represents a rotation axis line of the stator core 1. The stator core 1 of this embodiment is a stator core for use in a rotary electric machine of radial gap type, and more specifically is a stator core for use in a rotary electric machine of outer rotor type. The stator core for a rotary electric machine of the present teaching is not limited to this example, and it may be a stator core for a rotary electric machine of inner rotor type.

The stator core 1 includes a plurality of first members 10, a plurality of second members 20, and a single support member 30. In this embodiment, the number of the first members 10 and the number of the second members 20 are equally nine. The numbers of the first members 10 and the second members 20 are not particularly limited.

The plurality of first members 10 are arranged in the circumferential direction. Each of the plurality of first members 10 includes a first tooth part 11 extending toward one side (outward or outer side) with respect to the radial direction, first engaging parts 12 provided on opposite sides of the first tooth part 11 with respect to the circumferential direction, and a base part 13 provided on the other side (inward or inner side) with respect to the radial direction. The first engaging parts 12 are parts to be engaged with below-described second engaging parts 22. The first tooth part 11 includes a main portion 11a extending in the radial direction, and circumferential protruding portions 11b protruding from one (outward side) end portion of the main portion 11a with respect to the radial direction toward opposite sides of the main portion 11a with respect to the circumferential direction. The base part 13 has a mounting hole portion 13b. The mounting hole portion 13b is a recess that is, when viewed along the axis line, recessed toward the one side from the other side (inward side) of the base part 13 with respect to the radial direction. As a result of attachment of the support member 30 to the plurality of first members 10, each mounting hole portion 13b forms a mounting hole enclosed by the first member 10 and the support member 30.

The plurality of second members 20 are arranged in the circumferential direction. Each of the plurality of second members 20 includes a second tooth part 21 extending toward the one side (outward side) with respect to the radial direction, and a second engaging part 22 for engagement with two first engaging parts 12 adjacent to each other in the circumferential direction. The second engaging part 22 is a part to be engaged with the first engaging parts 12. The second tooth part 21 includes a main portion 21a extending in the radial direction, and circumferential protruding portions 21b protruding from one (outward side) end portion of the main portion 21a with respect to the radial direction toward opposite sides of the main portion 21a with respect to the circumferential direction. The second member 20 is not in contact with the support member 30.

The number (T) of teeth provided in the stator core 1 is equal to the sum of the number (t1) of first tooth parts 11 and the number (t2) of second tooth parts 21. Each first member 10 includes one first tooth part 11. Each second member 20 includes one second tooth part 21.

The support member 30 is configured to abut against the base parts 13 of the plurality of first members 10, which are arranged in the circumferential direction, so as to press the base parts 13 of the plurality of first members 10 from the other side (inward side) toward the one side (outward side) with respect to the radial direction. The support member 30 has a cylindrical shape in which a space is provided along the axis line. In the present teaching, the meaning of "abut" includes a state where the support member 30 is in direct contact with the base parts 13 of the plurality of first members 10 without any member interposed therebetween and a state where the support member 30 is in indirect contact with the base parts 13 of the plurality of first members 10 with another member interposed therebetween. As for the tooth parts 11, 21 and the engaging parts 12, 22, it is not always necessary in the present teaching for the tooth part and the engaging part to clearly be distinguishable from one another. It may be acceptable that the engaging parts 12, 22 are formed in proximal portions of the tooth parts 11, 21 as illustrated in this embodiment. In such a configuration, the proximal portions of the tooth parts 11, 21 are included in the tooth parts 11, 21 and also included in the engaging parts 12, 22.

In the figure, the reference sign P represents a primary magnetic flux path passing from a first tooth part 11 to a second tooth part 21 adjacent to the first tooth part 11. The primary magnetic flux path P passes through the first tooth part 11, at least one of the first and second engaging parts 12, 22, and the second tooth part 21. The primary magnetic flux path P is a part of a magnetic flux path that passes from the first tooth part 11 to the second tooth part 21 via the inside of the stator core 1. The magnetic resistance of the primary magnetic flux path P is lower than the magnetic resistance of a magnetic flux path that passes through another part. It is not always necessary that all of magnetic fluxes flowing from the first tooth part 11 to the second tooth part 21 flow through the primary magnetic flux path P. The magnetic fluxes flowing from the first tooth part 11 to the second tooth part 21 may partially flow through a region other than the primary magnetic flux path P. The primary magnetic flux path P is not through the support member 30.

The first engaging parts 12 and the second engaging parts 22 are configured such that movement of the second member 20 toward the one side (outward side) with respect to the radial direction is restricted by engagement of the second engaging part 22 with two first engaging parts 12 adjacent to each other in the circumferential direction, the engagement caused when the base parts 13 of the plurality of first members 10 are pressed from the other side (inward side) toward the one side (outward side) with respect to the radial direction, the pressing caused by abutment of the support member 30 against the base parts 13 of the plurality of first members 10.

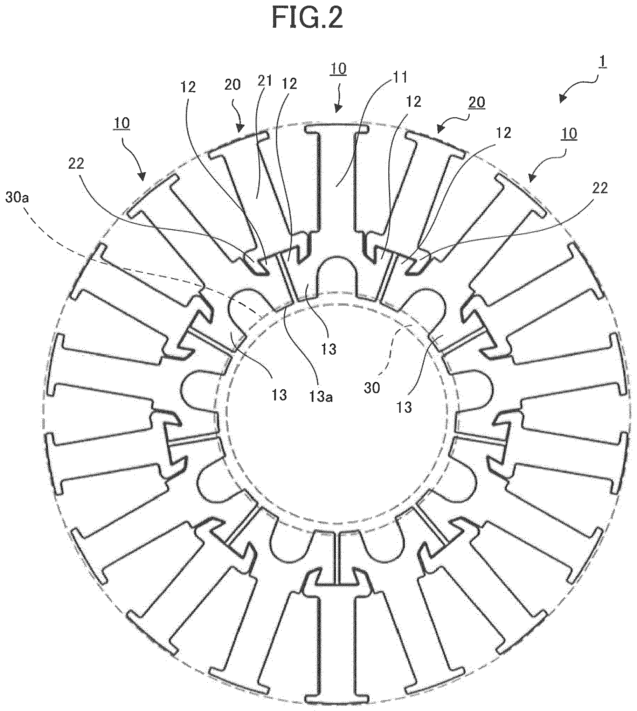

Installation of the support member 30 is described with reference to Fig. 2.

Fig. 2 is a diagram schematically showing a state of the stator core 1 before the support member 30 is provided, as viewed along the axis line.

The plurality of first members 10 and the plurality of second members 20 are arranged alternately with respect to the circumferential direction. The plurality of first members 10 and the plurality of second members 20 are arranged such that each second tooth part 21 is positioned between first tooth parts 11 of first members 10 adjacent to each other in the circumferential direction. In the stator core 1 shown in Fig. 2, the support member 30 is not provided yet. In the figure, the broken line indicates the position of the support member 30 where the support member 30 is assumed to be when provided in the stator core 1.

The second engaging part 22 is engaged with the first engaging parts 12 adjacent to each other in the circumferential direction. In the state shown Fig. 2, the first engaging parts 12 and the second engaging parts 22 are in relatively loose engagement because the support member 30 is not provided. Support-member-side surfaces 13a (inner circumferential surfaces) of the base parts 13 of the plurality of first members 10 are therefore located on the other side (inward side) with respect to the radial direction relative to the position where a teeth-side surface 30a (outer circumferential surface) of the support member 30 is supposed to be arranged.

The support member 30 is arranged such that the support member 30 abuts against the base parts 13 of the plurality of first members 10. This makes the support member 30 press the base parts 13 of the plurality of first members 10 from the other side (inward side) toward the one side (outward side) with respect to the radial direction. As a result, each of the plurality of first members 10 moves toward the one side (outward side) with respect to the radial direction, so that two first engaging parts 12 adjacent to each other in the circumferential direction are brought into engagement with a second engaging part 22. To be specific, the two first engaging parts 12 adjacent to each other in the circumferential direction are more tightly engaged with the second engaging part 22 (see Fig. 1). This restricts movement of the second member 20 toward the one side (outward side) with respect to the radial direction. Thus, the relative positional relationship of the plurality of first members 10 and the plurality of second members 20 is fixed. Particularly, the relative positional relationship of the plurality of first members 10 and the plurality of second members 20 is fixed with respect to the radial direction and the circumferential direction. As a consequence, the plurality of first members 10 and the plurality of second members 20 are more securely supported on the support member 30.

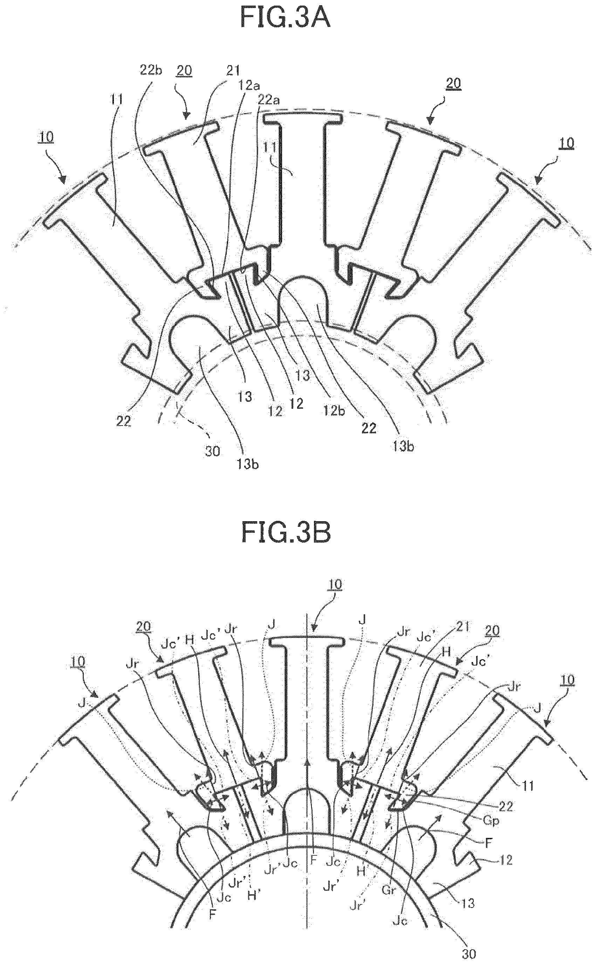

The first engaging part 12 and the second engaging part 22 are described with reference to Fig. 3.

Fig. 3A is a diagram schematically and partially showing, on an enlarged scale, a state of the stator core 1 before the support member 30 is provided, as viewed along the axis line. Fig. 3B is a diagram schematically and partially showing, on an enlarged scale, a state of the stator core 1 after the support member 30 is provided, as viewed along the axis line.

Each of the first engaging parts 12 arranged on opposite sides of the first member 10 with respect to the circumferential direction has a radial contact portion 12a that faces toward the one side (outward side) with respect to the radial direction. The second engaging part 22 has a radial contact portion 22a that faces toward the other side (inward side) with respect to the radial direction. Two adjacent radial contact portions 12a and the radial contact portion 22a are in direct abutment with each other in the radial direction. Two adjacent radial contact portions 12a and the radial contact portion 22a make surface contact with each other in the radial direction.

Each of the first engaging parts 12 arranged on opposite sides of the first member 10 with respect to the circumferential direction has a circumferential contact portion 12b. The circumferential contact portion 12b faces, with respect to the circumferential direction, toward the first tooth part 11 of the first member 10 to which the circumferential contact portion 12b itself belongs. The second engaging part 22 includes a circumferential contact portion 22b. The circumferential contact portion 22b faces, with respect to the circumferential direction, toward the second tooth part 21 of the second member 20 to which the circumferential contact portion 22b itself belongs. The circumferential contact portion 12b and the circumferential contact portion 22b are in direct abutment with each other in the circumferential direction. The circumferential contact portion 12b and the circumferential contact portion 22b are in surface contact with each other in the circumferential direction.

Fig. 3A as well as Fig. 2 shows the state in which the support member 30 is not provided. Providing the support member 30 in this state is described with reference to Fig. 3B. In the figure, straight arrows schematically indicate the direction and magnitude of a force applied to the first members 10 and the second members 20.

Upon abutment of the support member 30 against the base parts 13 of the plurality of first members 10, a force F directed toward the one side (outward side) with respect to the radial direction is applied to the first members 10. The force F represents a force at a center position of the first member 10 with respect to the circumferential direction. Since the first engaging part 12 is a part of the first member 10, the first engaging part 12 receives a force J having the same direction as that of the force F. The force J is not a force directed along the radial direction, because the position of the first engaging part with respect to the circumferential direction is different from the center position of the first member 10 with respect to the circumferential direction. The force J is divided into a circumferential component Jc and a radial component Jr. Thus, the forces Jc, Jr are applied from the first engaging part 12 to the second engaging part 22. Reaction forces Jc', Jr' of the forces Jc, Jr are applied from the second engaging part 22 to the first engaging part 12. A force H represents a force with which the second member 20 is pressed in the radial direction by the first member 10 at a center position of the second member 20 with respect to the circumferential direction. Reaction force H' of the force H is applied from the second member 20 to the first member 10.

In the circumferential contact portions 12b, 22b, the two adjacent first engaging parts 12 apply forces Jc directed opposite directions (forces Jc directed away from each other) to the second engaging part 22. Reaction forces Jc' (forces Jc' directed toward each other) of the forces Jc are applied from the second engaging part 22 to the first engaging parts 12. As a result, the first engaging parts 12 and the second engaging part 22 are engaged with each other. This restricts movement of the second member 20 in the radial direction. In the radial contact portions 12a, 22a, the first engaging parts 12 apply the forces (Jr, H) to the second engaging part 22. The reaction forces (Jr', H') of the forces (Jr, H) are applied from the second engaging part 22 to the first engaging parts 12.

In the stator core 1, therefore, the first engaging part 12 and the second engaging part 22 are, in their circumferential contact portions 12b, 22b, in close contact with each other in the circumferential direction. The first engaging part 12 and the second engaging part 22 are, in their radial contact portions 12a, 22a, in close contact with each other in the radial direction. Since occurrence of a minute gap is suppressed, the magnetic resistance of the primary magnetic flux path passing through the first tooth part 11, at least one of the first and second engaging parts 12, 22, and the second tooth part 21 is reduced.

In this embodiment, the primary magnetic flux path passing through the first tooth part 11, at least one of the first and second engaging parts 12, 22, and the second tooth part 21 is composed only of two kinds of members, namely, the first member 10 and the second member 20. A fixing member such as a screw or a pin is not arranged in the primary magnetic flux path passing through the first tooth part 11, at least one of the first and second engaging parts 12, 22, and the second tooth part 21. The first member 10 and the second member 20, which constitute the primary magnetic flux path, include the tooth parts 11, 21, respectively. That is, all of the two kinds of members constituting the primary magnetic flux path include the tooth parts 11, 21. In this embodiment, in the primary magnetic flux path composed only of the two kinds of members 10, 20 each having the tooth part 11 or 21, engagement of the first engaging parts 12 with the second engaging part 22 caused by the support member 30 pressing against the first members 10 restricts movement of the second member 20 in the radial direction and brings the two kinds of members 10, 20 into close contact with each other. Accordingly, the magnetic resistance of the primary magnetic flux path is reduced.

In this embodiment, the first member 10 and the second member 20 are configured such that a gap Gp in the circumferential direction and a gap Gr in the radial direction are ensured between the engaging part of one of the first and second members 10, 20 and the other of the first and second members 10, 20 while the first engaging part 12 and the second engaging part 22 are in contact with each other in the radial direction and the circumferential direction as a result of engagement of the first engaging part 12 with the second engaging part 22. More specifically, in this embodiment, the gap Gp in the circumferential direction and the gap Gr in the radial direction are ensured between the first member 10 and the second engaging part 22 of the second member 20, as shown in Fig. 3B. The first member and the second member are not limited to the ones illustrated in this example. In another example, the first member and the second member may be configured such that, while the first engaging part and the second engaging part are engaged with each other, a gap in the circumferential direction and a gap in the radial direction are ensured between the first member and the second member. Thus, design tolerances, manufacturing errors, etc., are allowable while characteristics of the rotary electric machine are maintained. It is possible to seek improvement in the characteristics of the rotary electric machine while avoiding cumbersomeness of a manufacturing process.

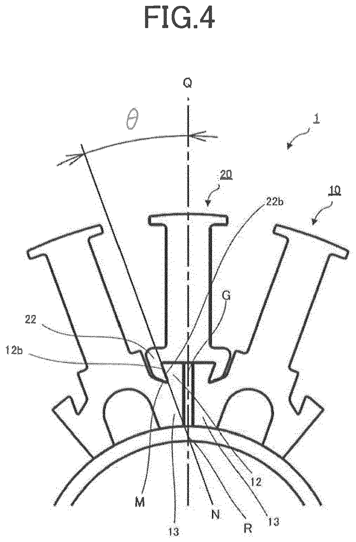

Fig. 4 is a diagram schematically and partially showing, on an enlarged scale, the stator core according to the embodiment of the present teaching, as viewed along the axis line.

The circumferential contact portions 12b, 22b are configured such that, when viewed along the axis line of the stator core 1, an intersection R between a straight line N and a straight line Q is located inward of the circumferential contact portions 12b, 22b with respect to the radial direction, the straight line N being on the extension of a side M where the first engaging part 12 and the second engaging part 22 are in contact with each other, the straight line Q extending in the radial direction and passing through the center of the second member 20 with respect to the circumferential direction. The intersection R is located outward of the rotation axis line (not shown) of the stator core 1 with respect to the radial direction. The angle θ between the straight lines N, Q forms a shape that flares outward with respect to the radial direction from the intersection R serving as a vertex. The angle θ satisfies θ>0(°). Although this embodiment illustrates a case where the side M is straight, the present teaching is not limited to this example. It may be acceptable that, for example, at least a part of the side M satisfies the above-mentioned relationship. There is a gap G between the base parts 13 of the first members 10 adjacent to each other in the circumferential direction. Thus, design tolerances, manufacturing errors, etc., are allowable while characteristics of the rotary electric machine are maintained. It is possible to seek improvement in the characteristics of the rotary electric machine with avoidance of cumbersomeness of a manufacturing process.

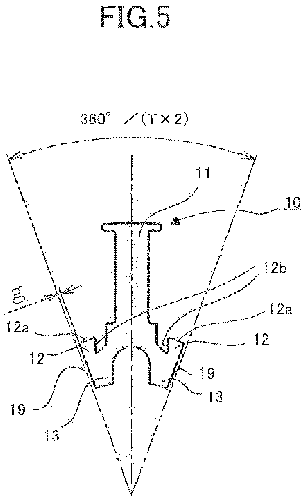

Fig. 5 is a diagram schematically showing the first member 10 according to the embodiment of the present teaching, as viewed along the axis line.

Of the circumferential angle 360° of the stator core 1, an angle range occupiable by the first member 10 is 360°/t1, and an angle range occupiable by the teeth is 360°/(T×2). The first member 10 is configured such that, within a width corresponding to the angle range occupiable by the first member 10, a space region 19 having a width g is ensured on each side of the first member 10 with respect to the circumferential direction. Thus, the circumferential width of the first member 10 is less than the width corresponding to the angle range occupiable by the first member 10. This configuration allows the gap G to be ensured between the base parts 13 of the first members 10 adjacent to each other in the circumferential direction while the support member 30 abuts against the base parts 13 of the plurality of first members 10.

Next, radial lengths of the first member 10 and the second member 20 are described.

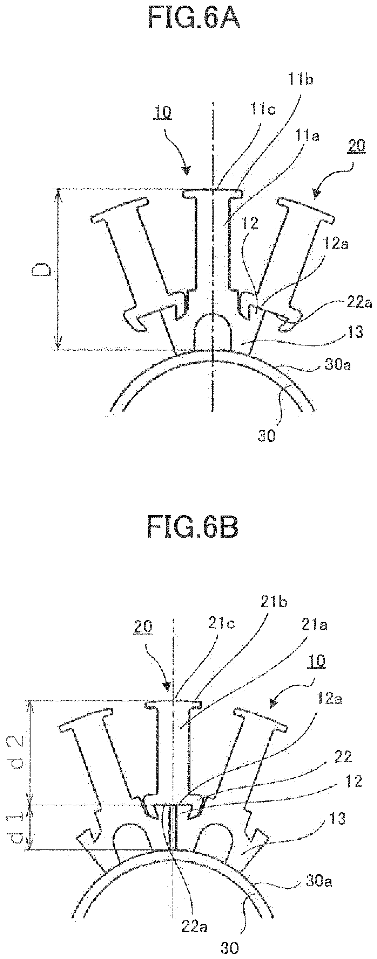

Figs. 6A and 6B are diagrams each showing schematically and partially, on an enlarged scale, a stator core 1 after the support member 30 is provided, as viewed along the axis line.

The first member 10 is configured such that D is substantially equal to the sum of d1 and d2. The reference sign D represents a radial length from the teeth-side surface 30a of the support member 30 to a top surface 11c of the first tooth part 11. The reference sign d1 represents a radial length from the teeth-side surface 30a of the support member 30 to contact surfaces of the radial contact portion 12a, 22a on which the first engaging part 12 and the second engaging part 22 are in contact with each other. The reference sign d2 represents a radial length from the contact surfaces of the radial contact portions 12a, 22a on which the first engaging part 12 and the second engaging part 22 are in contact with each other to a top surface 21c of the second tooth part 21. The lengths represented by D, d1, d2 are the length obtained when the support member 30 is in abutment with the base parts 13 of the plurality of first members 10. Here, being "substantially equal" means that design tolerances, manufacturing errors, etc., are allowable.

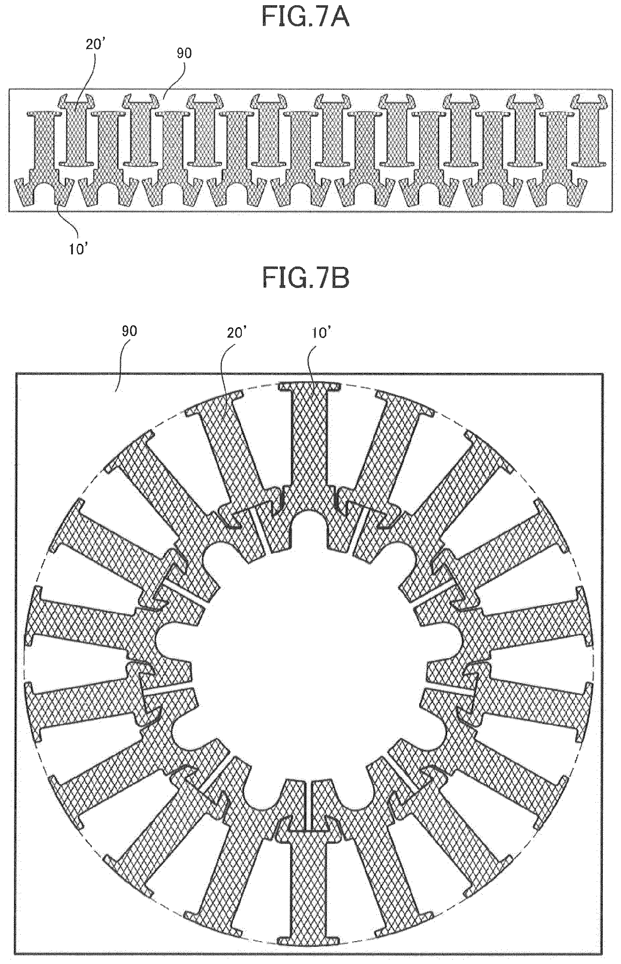

Fig. 7A is a diagram schematically showing an exemplary layout of plate members 10', 20' on a magnetic material plate 90, when the plate members 10', 20' are punched out of the magnetic material plate 90 for the manufacture of the first members 10 and the second members 20. Fig. 7B is a diagram schematically showing another example.

The plate members 10' for the first members 10 and the plate members 20' for the second members 20, which are arranged in a layout shown in Fig. 7A or Fig. 7B for example, are punched out of the magnetic material plate 90. The magnetic material plate 90 is not particularly limited and may be, for example, an electrical steel sheet. The first members 10 and the second members 20 are made of the same material.

The plate member 10' forms the first member 10. A plurality of plate members 10' are laminated and fixed to one another with an adhesive or the like, to manufacture the first member 10. The plate member 20' forms the second member 20. A plurality of plate members 20' are laminated and fixed to one another with an adhesive or the like, to manufacture the second member 20. The lamination of the plate members 10', 20' is in the axis line direction of the stator core 1.

In the layout shown in Fig. 7A, the plurality of plate members 10', 20' are arranged substantially in parallel with one another. Both the first member 10 and the second member 20 have tooth parts, and the first member 10 and the second member 20 have shapes that are longitudinally elongated and relatively similar to each other. Adoption of the layout as shown in Fig. 7A, therefore, enables dense arrangement of the plate members 10', 20' on the magnetic material plate 90. This can reduce a loss of the magnetic material plate 90. A layout corresponding to the shape of the stator core 1 viewed along the axis line as shown in Fig. 7B is also adoptable.

In a case where the first members 10 and the second members 20 are laminated bodies formed of the plate member 10', 20' shown in Figs. 7A and 7B for example, a punching distortion may occur in the plate members 10', 20' in the step of punching the plate members 10', 20' out of the magnetic material plate 90 during manufacture of the first members 10 and the second members 20. Forming the first members 10 and the second members 20 from plate members 10', 20' having a punching distortion may lead to an increased iron loss. The problem of an increased iron loss due to a punching distortion can, in general, occur not only in a stator core with split core design but also in a stator core with one-piece core design. The stator core with split core design, however, has a larger processed part than the stator core with one-piece core design does. The stator core with split core design, therefore, is likely to cause a higher iron loss than the stator core with one-piece core design is. The inventors of the present application have studied this problem, to accomplish the following configuration. The configuration is included in the stator core 1 of this embodiment.

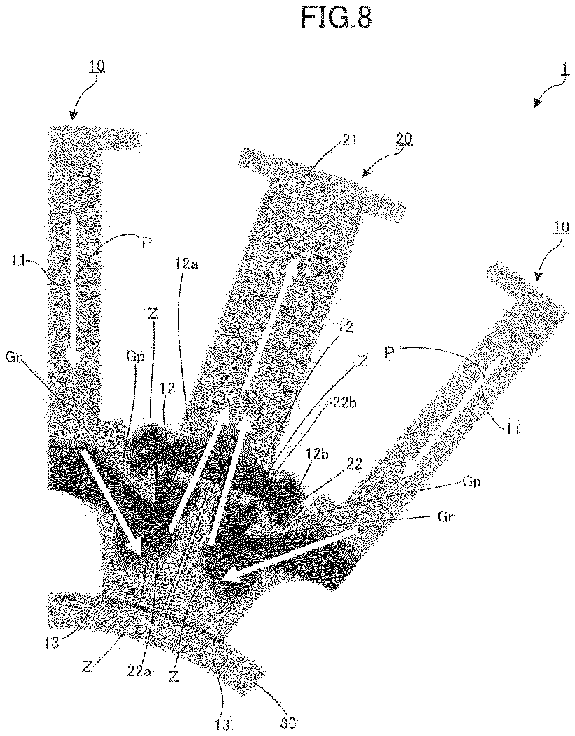

As shown in Fig. 8, the first member 10 and the second member 20 have a tensile stress receiving region Z to which a tensile stress is applied upon engagement of the second engaging part 22 with two first engaging parts 12 adjacent to each other in the circumferential direction under restriction of movement of the second member 20 toward the outward side with respect to the radial direction. In the figure, the tensile stress receiving region Z is colored with a gray darker than a gray of the first tooth part 11 and the second tooth part 21. The tensile stress receiving region Z is at least partially located in a magnetic flux path that passes from the first tooth part 11 to the second tooth part 21 via the inside of the stator core 1. Particularly in this embodiment, the tensile stress receiving region Z is at least partially located in the primary magnetic flux path P. The primary magnetic flux path P is indicated by white arrows in the figure.

In the stator core 1, at least part of magnetic fluxes flowing from the first tooth part 11 to the second tooth part 21 via the inside of the stator core 1 passes through the tensile stress receiving region Z. Thus, applying a tensile stress to a member having a punching distortion and making magnetic fluxes flow through a portion where the tensile stress is applied can suppress an increase in iron loss which otherwise may be caused by the punching distortion.

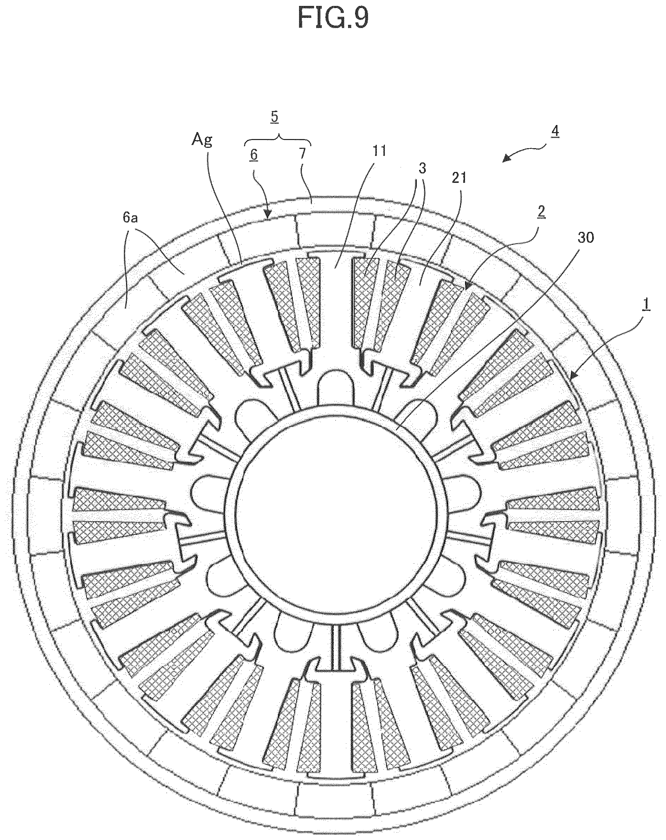

Fig. 9 is a diagram schematically showing a rotary electric machine according to the embodiment of the present teaching, as viewed along the axis line.

A rotary electric machine 4 includes a stator 2 and a rotor 5. The stator 2 includes the stator core 1 and windings 3 each wound on the first tooth part 11 or the second tooth part 21 of the stator core 1. The rotor 5 includes a permanent magnet part 6 and a back yoke part 7, the permanent magnet part 6 being arranged so as to face the first tooth parts 11 and the second tooth parts 21 of the stator 2 with a gap Ag therebetween, the back yoke part 7 being provided with the permanent magnet part 6. The permanent magnet part 6 is provided on the back yoke part 7 such that the permanent magnet part 6 is positioned between the stator 2 and the back yoke part 7 with respect to the radial direction. The permanent magnet part 6 is made up of a plurality of permanent magnets 6a arranged in the circumferential direction. The plurality of permanent magnets 6a are arranged with alternating magnetic poles (S-pole and N-pole).

While the stator core 1, the stator 2, and the rotary electric machine 4 according to the embodiment are described above, the present teaching is not limited to the above-described examples. Although the above embodiment illustrates the stator core 1, the stator 2, and the rotary electric machine 4 on the assumption that the rotary electric machine of radial gap type is a rotary electric machine of outer rotor type; the present teaching is also applicable to a stator core for a rotary electric machine of inner rotor type. The first engaging part and the second engaging part are not limited to the ones of the stator core 1 which are illustrated as an example.

To be specific, the stator core 1 shown in Figs. 1 to 9 is used in a rotary electric machine of outer rotor type, and configured such that the first engaging parts 12 adjacent to one another in the circumferential direction are located inward of the second engaging parts 22 with respect to the radial direction. Providing the support member 30 brings two first engaging parts 12, which are liable to move away from each other in the circumferential direction, into engagement with the second engaging part 22 that is located outward with respect to the radial direction. The present teaching, however, is not limited to this example, and the following configuration is adoptable, for example.

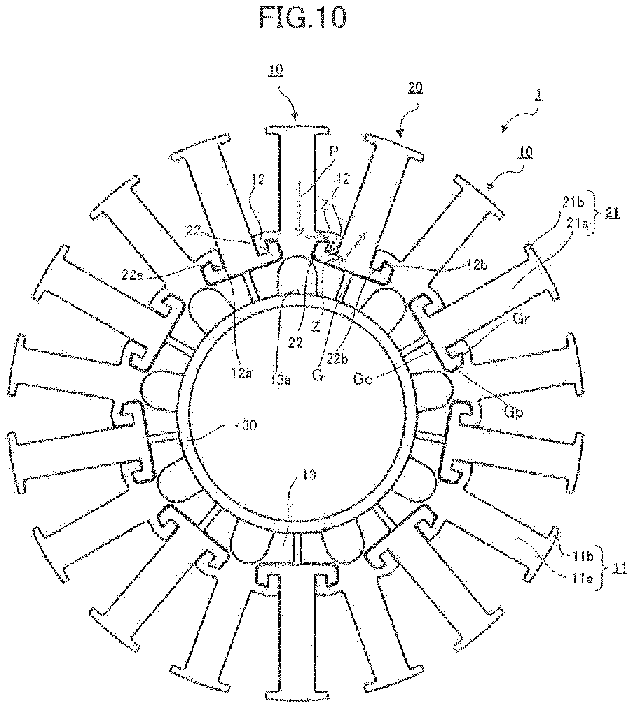

Figs. 10 to 12 are diagrams schematically and partially showing, on an enlarged scale, stator cores according to other embodiments of the present teaching, as viewed along the axis line. In Figs. 10 to 12, elements corresponding to the elements of the stator core 1 shown in Figs. 1 to 9 are given the same reference signs as in Figs. 1 to 9.

A stator core 1 shown in Fig. 10 is for use in a rotary electric machine of outer rotor type. First engaging parts 12 adjacent to one another in the circumferential direction are located outward of second engaging parts 22 with respect to the radial direction. Providing a support member 30 brings two first engaging parts 12, which are liable to move away from each other in the circumferential direction, into engagement with the second engaging part 22 located inward with respect to the radial direction. In the stator core 1 shown in Fig. 10, as a result of the engagement between the first engaging parts 12 and the second engaging part 22, close contact between the first engaging parts 12 and the second engaging part 22 in the circumferential direction is made in circumferential contact portions 12b, 22b. In addition, close contact between the first engaging parts 12 and the second engaging part 22 in the radial direction is made in radial contact portions 12a, 22a. At this time, a gap Gp in the circumferential direction and a gap Gr in the radial direction are ensured between the first member 10 and the second engaging part 22 of the second member 20. Moreover, a gap Ge in the radial direction is ensured between the first member 10 and the second member 20. In the stator core 1 shown in Fig. 10, therefore, the relationship of D=d1+d2 (see Figs. 6A and 6B) is not established. A primary magnetic flux path P passes from the first tooth part 11 to the second tooth part 21 via contact surfaces of the radial contact portions 12a, 22a on which the first engaging part 12 and the second engaging part 22 are in contact with each other. Due to the engagement between the first engaging part 12 and the second engaging part 22, a tensile stress receiving region Z is generated in the first member 10 and the second member 20. In the figure, the reference sign Z indicates the schematic position of the tensile stress receiving region. The primary magnetic flux path P passes through the tensile stress receiving region Z.

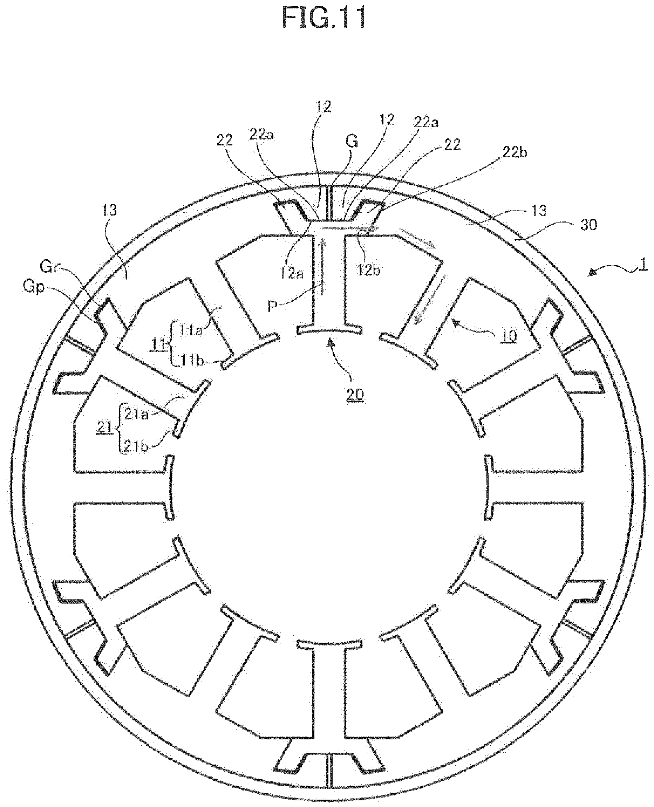

A stator core 1 shown in Fig. 11 is for use in a rotary electric machine of inner rotor type. First engaging parts 12 adjacent to one another in the circumferential direction are located outward of second engaging parts 22 with respect to the radial direction. Providing a support member 30 brings two first engaging parts 12, which are liable to move away from each other in the circumferential direction, into engagement with the second engaging part 22 located inward with respect to the radial direction. In the stator core 1 shown in Fig. 11, unlike the stator core 1 shown in Fig. 10, the gap Ge is not ensured. In the stator core 1 shown in Fig. 11, therefore, the relationship of D=d1+d2 (see Figs. 6A and 6B) is established. A primary magnetic flux path P passes from the first tooth part 11 to the second tooth part 21 via contact surfaces of circumferential contact portions 12b, 22b on which the first engaging part 12 and the second engaging part 22 are in contact with each other.

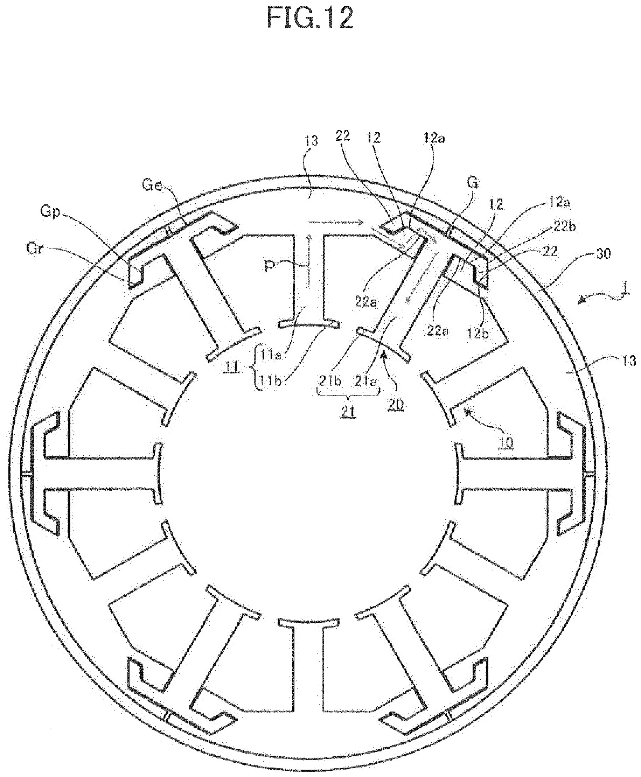

A stator core 1 shown in Fig. 12 is for use in a rotary electric machine of inner rotor type. First engaging parts 12 adjacent to one another in the circumferential direction are located inward of second engaging parts 22 with respect to the radial direction. Providing a support member 30 brings two first engaging parts 12, which are liable to move toward each other in the circumferential direction, into engagement with the second engaging part 22 located outward with respect to the radial direction. In the stator core 1 shown in Fig. 12, as a result of the engagement between the first engaging parts 12 and the second engaging part 22, close contact between the first engaging parts 12 and the second engaging part 22 in the circumferential direction is made in circumferential contact portions 12b, 22b. In addition, close contact between the first engaging parts 12 and the second engaging part 22 in the radial direction is made in radial contact portions 12a, 22a. At this time, a gap Gp in the circumferential direction and a gap Gr in the radial direction are ensured between the first member 10 and the second engaging part 22 of the second member 20. Moreover, a gap Ge in the radial direction is ensured between the first member 10 and the second member 20. In the stator core 1 shown in Fig. 12, therefore, the relationship of D=dl+d2 (see Figs. 6A and 6B) is not established. A primary magnetic flux path P passes from the first tooth part 11 to the second tooth part 21 via contact surfaces of the radial contact portions 12a, 22a on which the first engaging part 12 and the second engaging part 22 are in contact with each other.

As illustrated in the embodiment shown in Figs. 1 to 9 and the embodiments shown in Figs. 10 to 12, the present teaching is applicable to both the outer rotor type and the inner rotor type. In the present teaching, it suffices that the first engaging parts and the second engaging parts are configured such that movement of the second member toward one side with respect to the radial direction is restricted by engagement of the second engaging part with two first engaging parts adjacent to each other in the circumferential direction, the engagement caused when the base parts of the plurality of first members are pressed from the other side toward the one side with respect to the radial direction, the pressing caused by abutment of the support member against the base parts of the plurality of first members. The shapes of the first engaging parts and the second engaging parts are not limited to the ones illustrated in the embodiments. Here, it is preferable that the present teaching is applied to the outer rotor type, as illustrated in the embodiment shown in Figs. 1 to 9 and the embodiment shown in Fig. 10. The engagement between the first engaging part 12 and the second engaging part 22 generates the tensile stress receiving region Z in the first member 10 and the second member 20. Since at least part of magnetic fluxes flowing from the first tooth part 11 to the second tooth part 21 passes through the tensile stress receiving region Z, an increase in iron loss resulting from a punching distortion is suppressed.

It should be understood that the terms and expressions used herein are for descriptions and not to be construed in a limited manner, do not eliminate any equivalents of features shown and mentioned herein, and allow various modifications falling within the claimed scope of the present teaching.

The present teaching may be embodied in many different forms. The present disclosure is to be considered as providing examples of the principles of the teaching. A number of illustrative embodiments are described herein with the understanding that such examples are not intended to limit the teaching to preferred embodiments described herein and/or illustrated herein.

While some illustrative embodiments of the teaching have been described herein, the present teaching is not limited to the various preferred embodiments described herein. The present teaching includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to".

### Reference Signs List

- 1: stator core
- 2: stator
- 3: winding
- 4: rotary electric machine
- 5: rotor
- 6: permanent magnet part
- 7: back yoke part
- 10: first member
- 11: first tooth part
- 11a: main portion
- 11b: circumferential protruding portion
- 11c: top surface
- 12: first engaging part
- 12a: radial contact portion
- 12b: circumferential contact portion
- 13: base part
- 13a: support-member-side surface (inner circumferential surface)
- 13b: mounting hole portion
- 20: second member
- 21: second tooth part
- 21a: main portion
- 21b: circumferential protruding portion
- 21c: top surface
- 22: second engaging part
- 22a: radial contact portion
- 22b: circumferential contact portion
- 30: support member
- 30a: teeth-side surface (outer circumferential surface)

## Claims

1. A stator core (1) for a rotary electric machine (4), the stator core (1) comprising:
a plurality of first members (10) arranged in a circumferential direction and each including a first tooth part (11), first engaging parts (12), and a base part (13), the first tooth part (11) extending toward one side of inward and outward sides with respect to a radial direction, the first engaging parts (12) provided on opposite sides of the first tooth part (11) with respect to the circumferential direction, the base part (13) provided on the other side of the inward and outward sides with respect to the radial direction;
a plurality of second members (20) arranged in the circumferential direction and each including a second tooth part (21) and a second engaging part (22), the second tooth part (21) extending toward the one side with respect to the radial direction, the second engaging part (22) being engageable with two of the first engaging parts (12) adjacent to each other in the circumferential direction, the plurality of second members (20) being arranged such that the second tooth part (21) is positioned between two adjacent first tooth parts (11); and
a support member (30) configured to abut against the base parts (13) of the plurality of first members (10), which are arranged side by side in the circumferential direction,
the support member (30) having a cylindrical shape in which a space is provided along an axis line (A),
the second members (20) being not in contact with the support member (30), and
the first member (10) being configured such that, while the support member (30) abuts against the base parts (13) of the plurality of first members (10), a gap (G) is ensured between the base parts (13) of the first members (10) adjacent to each other in the circumferential direction,
**characterized in that**
the support member (30) is configured to abut against the base parts (13) of the plurality of first members (10) so as to press the base parts (13) of the plurality of first members (10) from the other side toward the one side with respect to the radial direction,
the first engaging part (12) and the second engaging part (22) are configured such that movement of the second member (20) toward the one side with respect to the radial direction is restricted by engagement of the second engaging part (22) with two of the first engaging parts (12) adjacent to each other in the circumferential direction, the engagement caused when the base parts (13) of the plurality of first members (10) are pressed from the other side toward the one side with respect to the radial direction, the pressing caused by abutment of the support member (30) against the base parts (13) of the plurality of first members (10), and
the first member (10) and the second member (20) are configured such that a gap (Gp) in the circumferential direction and a gap (Gr) in the radial direction are ensured between the engaging part of one of the first and second members (10, 20) and the other of the first and second members (10, 20) while the first engaging part (12) and the second engaging part (22) are in contact with each other in the radial direction and the circumferential direction as a result of engagement of the first engaging part (12) with the second engaging part (22).

2. The stator core (1) according to claim 1, wherein
the first tooth part (11) and the second tooth part (21) extend toward the outward side with respect to the radial direction,
the base part (13) is located inward with respect to the radial direction,
the support member (30) is configured to abut against the base parts (13) of the plurality of first members (10) so as to press the base parts (13) of the plurality of first members (10) from the inward side toward the outward side with respect to the radial direction, and
the first engaging part (12) and the second engaging part (22) are configured such that movement of the second member (20) toward the outward side with respect to the radial direction is restricted by engagement of the second engaging part (22) with two of the first engaging parts (12) adjacent to each other in the circumferential direction, the engagement caused when the base parts (13) of the plurality of first members (10) are pressed from the inward side toward the outward side with respect to the radial direction, the pressing caused by abutment of the support member (30) against the base parts (13) of the plurality of first members (10).

3. The stator core (1) according to claim 2, wherein
the first member (10) and the second member (20) have a tensile stress receiving region to which a tensile stress is applied upon engagement of the second engaging part (22) with two of the first engaging parts (12) adjacent to each other in the circumferential direction under restriction of movement of the second member (20) toward the outward side with respect to the radial direction, and the tensile stress receiving region is at least partially located in a magnetic flux path passing from the first tooth part (11) to the second tooth part (21) via the inside of the stator core (1).

4. The stator core (1) according to any one of claims 1 to 3, wherein
the first engaging part (12) and the second engaging part (22) have circumferential contact portions (12b, 22b) configured to make surface contact with each other in the circumferential direction.

5. The stator core (1) according to claim 4, wherein
the circumferential contact portion (12b, 22b) is configured such that, when viewed along the axis line (A) of the stator core (1), an intersection (R) between a straight line (N) on the extension of a side where the first engaging part (12) is contacted by the second engaging part (22) and a straight line (Q) extending in the radial direction and passing through the center of the second member (20) with respect to the circumferential direction is located inward of the circumferential contact portion (12b, 22b) with respect to the radial direction.

6. The stator core (1) according to any one of claims 1 to 5, wherein
the first engaging part (12) and the second engaging part (22) have radial contact portions (12a, 22a) configured to make surface contact with each other in the radial direction.

7. The stator core (1) according to claim 6, wherein
the first member (10) is configured such that, while the support member (30) abuts against the base parts (13) of the plurality of first members (10), a radial length (D) from a surface of the support member (30) on the first member (10) side to a top surface (11c) of the first tooth part (11) is substantially equal to the sum of a radial length (d1) and a radial length (d2), the radial length (d1) being a length from the surface of the support member (30) on the first member (10) side to a contact surface of the radial contact portion (12a, 22a) on which the first engaging part (12) and the second engaging part (22) are in contact with each other, the radial length (d2) being a length from the contact surface of the radial contact portion (12a, 22a) on which the first engaging part (12) and the second engaging part (22) are in contact with each other to a top surface (11c) of the second tooth part (21).

8. A stator (2) for a rotary electric machine (4), the stator (2) comprising:
the stator core (1) according to any one of claims 1 to 7; and
windings (3) wound on the first tooth parts (11) and the second tooth parts (21).

9. A rotary electric machine (4), comprising:
the stator (2) according to claim 8; and
a rotor (5) including a permanent magnet part (6) that is arranged so as to face the first tooth parts (11) and the second tooth parts (21) of the stator (2) with a gap (Ag) ensured between the permanent magnet part (6) and the tooth parts (11, 21).

## Patentansprüche

1. Ein Statorkern (1) für eine elektrische Drehmaschine (4), wobei der Statorkern (1) folgende Merkmale aufweist:
eine Mehrzahl erster Bauglieder (10), die in einer Umfangsrichtung angeordnet sind und die jeweils ein erstes Zahnteil (11), erste Ineingriffnahmeteile (12) und ein Basisteil (13) umfassen, wobei sich das erste Zahnteil (11) zu einer Seite ausgewählt aus einer nach innen gerichteten und einer nach außen gerichteten Seite in Bezug auf eine Radialrichtung erstreckt, wobei die ersten Ineingriffnahmeteile (12) auf gegenüberliegenden Seiten des ersten Zahnteils (11) in Bezug auf die Umfangsrichtung bereitgestellt sind, wobei das Basisteil (13) auf der anderen Seite der nach innen gerichteten und nach außen gerichteten Seite in Bezug auf die Radialrichtung bereitgestellt ist;
eine Mehrzahl zweiter Bauglieder (20), die in der Umfangsrichtung angeordnet sind und jeweils ein zweites Zahnteil (21) sowie ein zweites Ineingriffnahmeteil (22) umfassen, wobei sich das zweite Zahnteil (21) zu der einen Seite in Bezug auf die Radialrichtung erstreckt, wobei das zweite Ineingriffnahmeteil (22) mit zwei der ersten Ineingriffnahmeteile (12), die in der Umfangsrichtung benachbart sind, in Eingriff gebracht werden kann, wobei die Mehrzahl zweiter Bauglieder (20) derart angeordnet sind, dass das zweite Zahnteil (21) zwischen zwei benachbarten ersten Zahnteilen (11) positioniert ist; und
ein Stützbauglied (30), das dazu ausgebildet ist, gegen die Basisteile (13) der Mehrzahl erster Bauglieder (10), die nebeneinander in der Umfangsrichtung angeordnet sind, anzustoßen,
wobei das Stützbauglied (30) eine zylindrische Form aufweist, in der ein Raum entlang einer Achsenlinie (A) bereitgestellt ist,
wobei die zweiten Bauglieder (20) nicht mit dem Stützbauglied (30) in Kontakt stehen, und
wobei das erste Bauglied (10) derart ausgebildet ist, dass ein Zwischenraum (G) zwischen den Basisteilen (13) der ersten Bauglieder (10), die zueinander in der Umfangsrichtung benachbart sind, sichergestellt ist, während das Stützbauglied (30) gegen die Basisteile (13) der Mehrzahl erster Bauglieder (10) anstößt,
**dadurch gekennzeichnet, dass**:
das Stützbauglied (30) dazu ausgebildet ist, gegen die Basisteile (13) der Mehrzahl erster Bauglieder (10) anzustoßen, um die Basisteile (13) der Mehrzahl erster Bauglieder (10) von der anderen Seite zu der einen Seite in Bezug auf die Radialrichtung zu drücken,
wobei das erste Ineingriffnahmeteil (12) und das zweite Ineingriffnahmeteil (22) derart ausgebildet sind, dass eine Bewegung des zweiten Baugliedes (20) zu der einen Seite in Bezug auf die Radialrichtung durch eine Ineingriffnahme des zweiten Ineingriffnahmeteils (22) mit zwei der ersten Ineingriffnahmeteile (12), die zueinander in der Umfangsrichtung benachbart sind, eingeschränkt ist, wobei die Ineingriffnahme bewirkt wird, wenn die Basisteile (13) der Mehrzahl erster Bauglieder (10) von der anderen Seite zu der einen Seite in Bezug auf die Radialrichtung gedrückt werden, wobei das Drücken durch ein Anstoßen des Stützbaugliedes (30) gegen die Basisteile (13) der Mehrzahl erster Bauglieder (10) bewirkt wird, und
wobei das erste Bauglied (10) und das zweite Bauglied (20) derart ausgebildet sind, dass ein Zwischenraum (Gp) in der Umfangsrichtung und ein Zwischenraum (Gr) in der Radialrichtung zwischen dem Ineingriffnahmeteil eines des ersten und des zweiten Baugliedes (10, 20) und des anderen des ersten und des zweiten Baugliedes (10, 20) sichergestellt werden, während das erste Ineingriffnahmeteil (12) und das zweite Ineingriffnahmeteil (22) in der Radialrichtung und in der Umfangsrichtung als Ergebnis einer Ineingriffnahme des ersten Ineingriffnahmeteils (12) und des zweiten Ineingriffnahmeteils (22) miteinander in Kontakt stehen.

2. Der Statorkern (1) gemäß Anspruch 1, wobei
das erste Zahnteil (11) und das zweite Zahnteil (21) sich zu der nach außen gerichteten Seite in Bezug auf die Radialrichtung erstrecken,
sich das Basisteil (13) innen in Bezug auf die Radialrichtung befindet,
das Stützbauglied (30) dazu ausgebildet ist, gegen die Basisteile (13) der Mehrzahl erster Bauglieder (10) anzustoßen, um die Basisteile (13) der Mehrzahl erster Bauglieder (10) von der nach innen gerichteten Seite zu der nach außen gerichteten Seite in Bezug auf die Radialrichtung zu drücken, und
das erste Ineingriffnahmeteil (12) und das zweite Ineingriffnahmeteil (22) derart ausgebildet sind, dass eine Bewegung des zweiten Baugliedes (20) zu der nach außen gerichteten Seite in Bezug auf die Radialrichtung durch eine Ineingriffnahme des zweiten Ineingriffnahmeteils (22) mit zwei der ersten Ineingriffnahmeteile (12), die zueinander in der Umfangsrichtung benachbart sind, eingeschränkt ist, wobei die Ineingriffnahme bewirkt wird, wenn die Basisteile (13) der Mehrzahl erster Bauglieder (10) von der nach innen gerichteten Seite zu der nach außen gerichteten Seite in Bezug auf die Radialrichtung gedrückt werden, wobei das Drücken durch ein Anstoßen des Stützbaugliedes (30) gegen die Basisteile (13) der Mehrzahl erster Bauglieder (10) bewirkt wird.

3. Der Statorkern (1) gemäß Anspruch 2, wobei
das erste Bauglied (10) und das zweite Bauglied (20) einen Zugbelastungsaufnahmebereich aufweisen, auf den eine Zugbelastung bei Ineingriffnahme des zweiten Ineingriffnahmeteils (22) mit zwei der ersten Ineingriffnahmeteile (12), die zueinander in der Umfangsrichtung benachbart sind, unter Einschränkung einer Bewegung des zweiten Baugliedes (20) zu der nach außen gerichteten Seite in Bezug auf die Radialrichtung ausgeübt wird, und wobei sich der Zugbelastungsaufnahmebereich zumindest teilweise in einem Magnetflusspfad befindet, der sich von dem ersten Zahnteil (11) über die Innenseite des Statorkerns (1) zu dem zweiten Zahnteil (21) erstreckt.

4. Der Statorkern (1) gemäß einem der Ansprüche 1 bis 3, wobei
das erste Ineingriffnahmeteil (12) und das zweite Ineingriffnahmeteil (22) Umfangskontaktabschnitte (12b, 22b) aufweisen, die dazu ausgebildet sind, einen Oberflächenkontakt miteinander in der Umfangsrichtung herzustellen.

5. Der Statorkern (1) gemäß Anspruch 4, wobei
der Umfangskontaktabschnitt (12b, 22b) derart ausgebildet ist, dass sich bei Betrachtung entlang der Achsenlinie (A) des Statorkerns (1) ein Schnittpunkt (R) zwischen einer geraden Linie (N) der auf der Erstreckung einer Seite, wo das erste Ineingriffnahmeteil (12) von dem zweiten Ineingriffnahmeteil (22) kontaktiert wird, und einer geraden Linie (Q), die sich in der Radialrichtung erstreckt und in Bezug auf die Umfangsrichtung durch die Mitte des zweiten Baugliedes (20) verläuft, innen von dem Umfangskontaktabschnitt (12b, 22b) in Bezug auf die Radialrichtung befindet.

6. Der Statorkern (1) gemäß einem der Ansprüche 1 bis 5, wobei
das erste Ineingriffnahmeteil (12) und das zweite Ineingriffnahmeteil (22) Radialkontaktabschnitte (12a, 22a) aufweisen, die dazu ausgebildet sind, einen Oberflächenkontakt miteinander in der Radialrichtung herzustellen.

7. Der Statorkern (1) gemäß Anspruch 6, wobei
das erste Bauglied (10) derart ausgebildet ist, dass, während das Stützbauglied (30) gegen die Basisteile (13) der Mehrzahl erster Bauglieder (10) anstößt, eine radiale Länge (D) von einer Oberfläche des Stützbaugliedes (30) auf der Seite des ersten Baugliedes (10) zu einer Oberseitenoberfläche (11c) des ersten Zahnteils (11) im Wesentlichen gleich der Summe einer Radiallänge (d1) und einer Radiallänge (d2) ist, wobei die Radiallänge (d1) eine Länge von der Oberfläche des Stützbaugliedes (30) auf der Seite des ersten Baugliedes (10) zu einer Kontaktoberfläche des Radialkontaktabschnittes (12a, 22a) ist, auf der das erste Ineingriffnahmeteil (12) und das zweite Ineingriffnahmeteil (22) miteinander in Kontakt stehen, wobei die Radiallänge (d2) eine Länge von der Kontaktoberfläche des Radialkontaktabschnittes (12a, 22a), auf der das erste Ineingriffnahmeteil (12) und das zweite Ineingriffnahmeteil (22) miteinander in Kontakt stehen, zu einer Oberseitenoberfläche (11c) des zweiten Zahnteils (21) ist.

8. Ein Stator (2) für eine elektrische Drehmaschine (4), wobei der Stator (2) folgende Merkmale aufweist:
den Statorkern (1) gemäß einem der Ansprüche 1 bis 7; und
Wicklungen (3), die auf die ersten Zahnteile (11) und die zweiten Zahnteile (21) gewickelt sind.

9. Eine elektrische Drehmaschine (4), die folgende Merkmale aufweist:
den Stator (2) gemäß Anspruch 8; und
einen Rotor (5), der ein Permanentmagnetteil (6) umfasst, das dahingehend angeordnet ist, auf die ersten Zahnteile (11) und die zweiten Zahnteile (21) des Stators (2) zu zeigen, wobei zwischen dem Permanentmagnetteil (6) und den Zahnteilen (11, 21) ein Zwischenraum (Ag) sichergestellt ist.

## Revendications

1. Noyau de stator (1) pour une machine électrique rotative (4), le noyau de stator (1) comprenant:
une pluralité de premiers éléments (10) disposés dans une direction circonférentielle et comportant, chacun, une première partie de dent (11), des premières parties de venue en prise (12) et une partie de base (13), la première partie de dent (11) s'étendant vers un côté parmi les côtés intérieur et extérieur par rapport à une direction radiale, les premières parties de venue en prise (12) étant prévues sur des côtés opposés de la première partie de dent (11) par rapport à la direction circonférentielle, la partie de base (13) étant prévue de l'autre côté parmi les côtés intérieur et extérieur par rapport à la direction radiale;
une pluralité de deuxièmes éléments (20) disposés dans la direction circonférentielle et comportant, chacun, une deuxième partie de dent (21) et une deuxième partie de venue en prise (22), la deuxième partie de dent (21) s'étendant vers l'un côté par rapport à la direction radiale, la deuxième partie de venue en prise (22) pouvant venir en prise avec deux des premières parties de venue en prise (12) adjacentes l'une à l'autre dans la direction circonférentielle, la pluralité de deuxièmes éléments (20) étant disposés de sorte que la deuxième partie de dent (21) soit positionnée entre deux premières parties de dent adjacentes (11); et
un élément de support (30) configuré pour venir en butée contre les parties de base (13) de la pluralité de premiers éléments (10) qui sont disposés côte à côte dans la direction circonférentielle,
l'élément de support (30) présentant une forme cylindrique dans laquelle est prévu un espace le long d'une ligne d'axe (A),
les deuxièmes éléments (20) n'étant pas en contact avec l'élément de support (30), et
le premier élément (10) étant configuré de sorte que, tandis que l'élément de support (30) vient en butée contre les parties de base (13) de la pluralité de premiers éléments (10), un interstice (G) soit assuré entre les parties de base (13) des premiers éléments (10) adjacents l'un à l'autre dans la direction circonférentielle,
**caractérisé par le fait que**
l'élément de support (30) est configuré pour venir en butée contre les parties de base (13) de la pluralité de premiers éléments (10) de manière à pousser les parties de base (13) de la pluralité de premiers éléments (10) de l'autre côté vers l'un côté par rapport à la direction radiale,
la première partie de venue en prise (12) et la deuxième partie de venue en prise (22) sont configurées de sorte que le mouvement du deuxième élément (20) vers l'un côté par rapport à la direction radiale soit limité par la venue en prise de la deuxième partie de venue en prise (22) avec deux des premières parties de venue en prise (12) adjacentes l'une à l'autre dans la direction circonférentielle, la venue en prise étant provoquée lorsque les parties de base (13) de la pluralité de premiers éléments (10) sont poussées de l'autre côté vers l'un côté par rapport à la direction radiale, la poussée étant provoquée par la venue en butée de l'élément de support (30) contre les parties de base (13) de la pluralité de premiers éléments (10), et
le premier élément (10) et le deuxième élément (20) sont configurés de sorte qu'un interstice (Gp) dans la direction circonférentielle et un interstice (Gr) dans la direction radiale soient assurés entre la partie de venue en prise de l'un parmi les premier et deuxième éléments (10, 20) et l'autre parmi les premier et deuxième éléments (10, 20) tandis que la première partie de venue en prise (12) et la deuxième partie de venue en prise (22) sont en contact l'une avec l'autre dans la direction radiale et la direction circonférentielle comme résultat de la venue en prise de la première partie de venue en prise (12) avec la deuxième partie de venue en prise (22).

2. Noyau de stator (1) selon la revendication 1, dans lequel
la première partie de dent (11) et la deuxième partie de dent (21) s'étendent vers le côté extérieur par rapport à la direction radiale,
la partie de base (13) est située à l'intérieur par rapport à la direction radiale,
l'élément de support (30) est configuré pour venir en butée contre les parties de base (13) de la pluralité de premiers éléments (10) de manière à pousser les parties de base (13) de la pluralité de premiers éléments (10) du côté intérieur vers le côté extérieur par rapport à la direction radiale, et
la première partie de venue en prise (12) et la deuxième partie de venue en prise (22) sont configurées de sorte que le mouvement du deuxième élément (20) vers le côté extérieur par rapport à la direction radiale soit limité par la venue en prise de la deuxième partie de venue en prise (22) avec deux des premières parties de venue en prise (12) adjacentes l'une à l'autre dans la direction circonférentielle, la venue en prise étant provoquée lorsque les parties de base (13) de la pluralité de premiers éléments (10) sont poussées du côté intérieur vers le côté extérieur par rapport à la direction radiale, la poussée étant provoquée par la venue en butée de l'élément de support (30) contre les parties de base (13) de la pluralité de premiers éléments (10).

3. Noyau de stator (1) selon la revendication 2, dans lequel
le premier élément (10) et le deuxième élément (20) présentent une région de réception d'effort de traction à laquelle est appliquée un effort de traction lors de la venue en prise de la deuxième partie de venue en prise (22) avec deux des premières parties de venue en prise (12) adjacentes l'une à l'autre dans la direction circonférentielle avec limitation de mouvement du deuxième élément (20) vers le côté extérieur par rapport à la direction radiale, et la région de réception d'effort de traction est située au moins partiellement dans un trajet de flux magnétique passant de la première partie de dent (11) à la deuxième partie de dent (21) par l'intérieur du noyau de stator (1).

4. Noyau de stator (1) selon l'une quelconque des revendications 1 à 3, dans lequel
la première partie de venue en prise (12) et la deuxième partie de venue en prise (22) présentent des parties de contact circonférentielles (12b, 22b) configurées pour entrer en contact superficiel l'une avec l'autre dans la direction circonférentielle.

5. Noyau de stator (1) selon la revendication 4, dans lequel
la partie de contact circonférentielle (12b, 22b) est configurée de sorte que, lorsqu'elle est vue le long de la ligne d'axe (A) du noyau de stator (1), une intersection (R) entre une ligne droite (N) sur l'étendue d'un côté où avec la première partie de venue en prise (12) entre en contact la deuxième partie de venue en prise (22) et une ligne droite (Q) s'étendant dans la direction radiale et passant par le centre du deuxième élément (20) par rapport à la direction circonférentielle est située à l'intérieur de la partie de contact circonférentielle (12b, 22b) par rapport à la direction radiale.

6. Noyau de stator (1) selon l'une quelconque des revendications 1 à 5, dans lequel
la première partie de venue en prise (12) et la deuxième partie de venue en prise (22) présentent des parties de contact radiales (12a, 22a) configurées pour entrer en contact superficiel l'une avec l'autre dans la direction radiale.

7. Noyau de stator (1) selon la revendication 6, dans lequel
le premier élément (10) est configuré de sorte que, tandis que l'élément de support (30) vient en butée contre les parties de base (13) de la pluralité de premiers éléments (10), une longueur radiale (D) d'une surface de l'élément de support (30) du côté du premier élément (10) à une surface supérieure (11c) de la première partie de dent (11) est sensiblement égale à la somme d'une longueur radiale (d1) et d'une longueur radiale (d2), la longueur radiale (d1) étant une longueur de la surface de l'élément de support (30) du côté du premier élément (10) à une surface de contact de la partie de contact radiale (12a, 22a) sur laquelle la première partie de venue en prise (12) et la deuxième partie de venue en prise (22) sont en contact l'une avec l'autre, la longueur radiale (d2) étant une longueur de la surface de contact de la partie de contact radiale (12a, 22a) sur laquelle la première partie de venue en prise (12) et la deuxième partie de venue en prise (22) sont en contact l'une avec l'autre à une surface supérieure (11c) de la deuxième partie de dent (21).

8. Stator (2) pour une machine électrique rotative (4), le stator (2) comprenant:
le noyau de stator (1) selon l'une quelconque des revendications 1 à 7; et
des enroulements (3) enroulés sur les premières parties de dent (11) et les deuxièmes parties de dent (21).

9. Machine électrique rotative (4), comprenant:
le stator (2) selon la revendication 8; et
un rotor (5) comportant une partie d'aimant permanent (6) qui est disposée de manière à faire face aux premières parties de dent (11) et aux deuxièmes parties de dent (21) du stator (2) avec un interstice (Ag) assuré entre le la partie d'aimant permanent (6) et les parties de dent (11, 21).
